# EUROPEAN PATENT SPECIFICATION

(11) **EP 3 316 750 B1**
(45) Date of publication and mention of the grant of the patent: **12.12.2018**
(21) Application number: 16763003.7
(22) Date of filing: 02.09.2016
(51) Int. Cl.: A47J 43/044, A47J 43/07

(54) **FOOD PROCESSING APPARATUS**
LEBENSMITTELVERARBEITUNGSVORRICHTUNG
APPAREIL DE TRAITEMENT D'ALIMENTS

(30) Priority: 03.09.2015 EP 15183661
(43) Date of publication of application: 09.05.2018
(73) Proprietor: Koninklijke Philips N.V., 5656 AE Eindhoven (NL)
(72) Inventor: OBERSTEINER, Heimo, 5656 AE Eindhoven (NL); MURBACHER, Werner, Karl, 5656 AE Eindhoven (NL); QUINESSER, Albert, 5656 AE Eindhoven (NL)
(74) Representative: Freeke, Arnold
(86) International application number: PCT/EP2016/070720
(87) International publication number: WO 2017/037233

(56) References cited:
- WO-A1-2007/046029
- US-B2- 6 676 051

## Description

### FIELD OF THE INVENTION

The present invention relates to a food processing apparatus having a collection bowl, a separation basket mounted in the collection bowl, a drive unit and a food processing member driven by the drive unit within the separation basket.

### BACKGROUND OF THE INVENTION

Many different types of food processors are being marketed to aid their users in the preparation of food products. A particular type of such a food processing apparatus is designed to grinds or chop whole food products, e.g. vegetables such as onions or potatoes, nuts, ice cubes, and so on, into pieces of a desired size. To this end, the food processing apparatus typically comprises a food processing member such as one or more cutting blades or a grinding element coupled to a drive unit and retained in a separation basket having apertures or holes to allow cut-up pieces of a small enough size to pass through the separation basket. The separation basket is typically suspended in a collection bowl that collects the cut pieces of the food product. An example of such a chopping device is disclosed in US 6,676,051 B2.

The design of such food processing apparatuses may be governed by international safety regulations, such as for example International Electrotechnical Commission regulation IEC 60335-2-1420.114. Under this regulation, access to dangerous moving parts of food processors shall be prevented for all combinations of assembly of detachable parts that allow the motor to operate. This regulation refers to a test in which detachable parts of the food processor are removed or assembled incorrectly in a manner that can occur in use, such as the incorrect location or misalignment of the parts. According to the test, during the application of a force not exceeding 5 N to the parts in any direction, it should not be possible to touch dangerous moving parts of the food processing apparatus with the test probe B of IEC 61032.

For example, in the chopping device of US 6,676,051 B2, it should not be possible to operate the device in the absence of the container body as this would allow access to the rotary chopping tool with the test probe through the sieve of the chopping device.

Document WO-A-2007/046029 discloses a food processing apparatus comprising a collection bowl comprising an alignment portion on a bowl floor; a separation basket mounted in the collection bowl and comprising a lower central aperture facing the alignment portion; a drive unit comprising a power delivery interface; and a food processing assembly having an engagement member engaging with the alignment portion and having an upper portion extending through the lower central aperture towards the drive unit.

### SUMMARY OF THE INVENTION

The present invention seeks to provide a food processing apparatus that prevents engagement of the food processing member by the drive unit in the absence of the collection bowl.

According to an aspect, there is provided a food processing apparatus comprising, when assembled, a collection bowl comprising an alignment portion on a bowl floor; a separation basket mounted in the collection bowl and comprising a lower central aperture facing the alignment portion; a drive unit comprising a power delivery interface; and a food processing assembly, comprising a food processing member having a maximum diameter larger than the lower central aperture diameter within the separation basket and having a body comprising an engagement portion facing the alignment portion; and a shaft for engaging the food processing member with the power delivery interface, the shaft comprising an engagement member engaging with the alignment portion and having an upper portion extending through the lower central aperture towards the drive unit, the upper portion having a maximum diameter smaller than the lower central aperture diameter and being slidably engaged with the engagement portion.

Hence, the food processing apparatus provides an arrangement wherein the food processing member such as a cutting or grinding member is held in position by a shaft that is supported on the collection bowl floor. The removal of the collection bowl thus causes the shaft to drop from the separation basket through its central aperture by virtue of the upper portion of the shaft residing in the separation basket having a smaller maximum dimension than the central aperture diameter. This stops the food processing member from engaging with the drive unit as the sliding engagement between the food processing member and its shaft causes the shaft to slide out of this engagement when the collection bowl is removed, thus breaking the coupling of the food processing member with the drive unit. Moreover, operation of the food processing apparatus without its collection bowl becomes practically impossible as the user would need to manually retain the retention member in its position for the food processing member to retain its engagement with the drive unit, which requires excessive force especially to counteract the torque generated by the drive unit in operation.

In an embodiment, the food processing member is directly coupled to the drive unit. In this embodiment, the body of the food processing member has an upper portion rotatably coupled to the power delivery interface and a lower portion comprising the engagement portion; and the shaft is arranged to retain the food processing member against the drive unit.

In an alternative embodiment, the food processing member is indirectly coupled to the drive unit. In this embodiment, the shaft is a drive shaft of the food processing member, said upper portion being rotatably coupled to the power delivery interface; and the engagement portion of the food processing member is a channel through said body, the upper portion of the drive shaft extending through said channel. This embodiment for instance has the advantage of particular ease of assembly of the food processing apparatus, as the food processing member does not require retaining against the drive unit when assembling the apparatus.

The drive shaft may comprise a stop portion for retaining the body of the food processing member on the upper portion. This prevents the food processing member from sliding down the drive shaft when assembling the food processing assembly. The stop portion for instance may comprises an edge protruding from the drive shaft or may comprise a step from the upper portion to a lower portion of the drive shaft, i.e. a lower portion having a larger diameter than the upper portion.

The body of the food processing member may have a maximum diameter larger than the central aperture diameter to prevent the body from exiting the separation basket. The separation basket may comprise a rim around the lower aperture, the food processing member being retained in the separation basket by an engagement between the food processing member body and the rim, such that the food processing member does not require retaining on the drive shaft.

The food processing apparatus may further comprise a cleaning lid removably mounted over the separation basket for shielding the drive unit, the cleaning lid comprising a further aperture, wherein the upper portion of the drive shaft extends through the further aperture and the food processing member is located between the cleaning lid and the separation basket. This prevents the drive unit from being soiled by the food products during the food processing, which can extend the lifetime of the food processing apparatus and makes its cleaning more straightforward, e.g. when the lid is dishwasher-safe.

In an embodiment, the separation basket comprises a mesh including holes having a maximum diameter in the range of 5-12 mm in order to allow the passing of pieces of food of a desirable diameter, e.g. onion pieces. Preferably, the holes have a polygonal shape having a first dimension from 6 to 8 mm and a second dimension from 9 to 11 mm.

The separation basket may comprise at least one set of flow-breaker disposing on the inner wall of the separation basket, each set of the flow-breaker comprises at least two separate ribs or one united rib.

The amount of the set of the flow-breaker disposing on the inner wall of the separation basket is 2 to 8.

The separation basket may be interfaced with one of the collection bowl and drive unit to prevent rotation of the filter basket during operation of the food processing apparatus.

The drive unit may be adapted to be disabled from functioning when separation basket is not assembled to further enhance the safety of the food processing apparatus.

The drive unit may be contained in a sealed unit including a user interface, the sealed unit fitting onto the collection bowl in order to provide a compact food processing apparatus.

The food processing apparatus may be a hand-held food processing apparatus or a surface-mounted food processing apparatus.

### BRIEF DESCRIPTION OF THE DRAWINGS

Embodiments of the invention are described in more detail and by way of non-limiting examples with reference to the accompanying drawings, wherein:
FIG. 1 schematically depicts a perspective view of a retention member according to an embodiment;
FIG. 2 schematically depicts a cross-section of the retention member of FIG. 1;
FIG. 3 schematically depicts a cross-section of the retention member according to another embodiment;
FIG. 4 schematically depicts a perspective view of a food processing member according to an embodiment;
FIG. 5 schematically depicts a cross-section of a food processing apparatus according to an embodiment;
FIG. 6 schematically depicts an exploded perspective view of an aspect of the food processing apparatus of FIG. 5;
FIG. 6A schematically depicts a perspective view of a separation basket according to an embodiment;
FIG. 6B schematically depicts a perspective view of a separation basket according to another embodiment;
FIG. 6C schematically depicts a perspective view of a separation basket according to still another embodiment;
FIG. 7 schematically depicts a safety aspect of a food processing apparatus according to an embodiment;
FIG. 8 schematically depicts an exploded perspective view of an aspect of the food processing apparatus according to an embodiment;
FIG. 9 schematically depicts the aspect of FIG. 8 in assembled form; and
FIG. 10 schematically depicts a cross-section of a food processing apparatus according to another embodiment.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

In the context of the present application, where reference is made to a diameter, this may refer to a cross-sectional dimension of a circular body or aperture but is not limited thereto. Where reference is made to the diameter of a non-circular body or aperture, this refers to the largest or major cross-sectional dimension of the non-circular body or aperture.

In embodiments of the present invention, a food processing apparatus is provided that contains a (two-piece) food processing assembly containing two separate parts, namely a food processing member for processing food, e.g. chopping, cutting or grinding food products, and a retention member or shaft that cooperates with the collection bowl of the food processing apparatus and retains a coupling between the food processing member and the drive unit, e.g. motor, of the food processing apparatus. The retention is dependent on the collection bowl of the food processing apparatus being correctly assembled; upon the removal or absence of the collection bowl, the engagement between the shaft and the food processing member is disrupted, i.e. the food processing assembly is disassembled. This is typically achieved by the food processing member engaging with the shaft by means of a sliding coupling, that is, the food processing member slides over a part of the shaft or vice versa, such that the retention shift can slide away from the food processing member when the collection bowl is removed from the food processing apparatus.

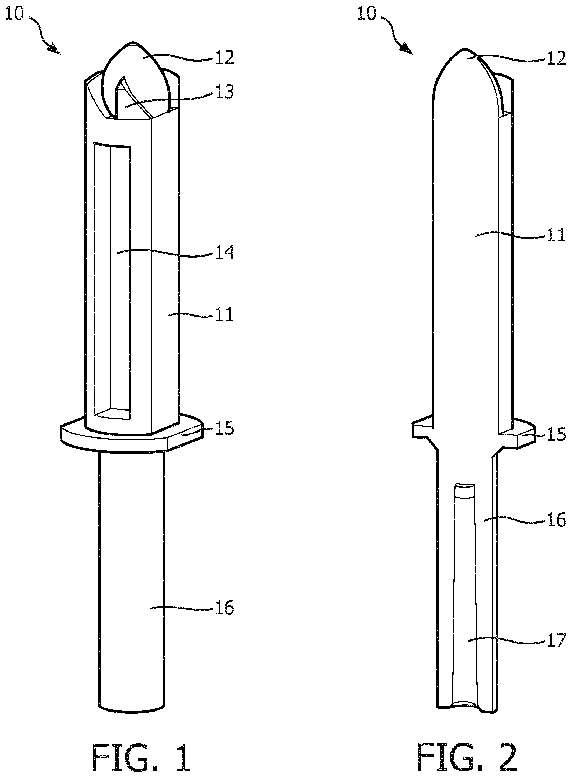

FIG. 1 schematically depicts a perspective view and FIG. 2 schematically depicts a cross-section of a first embodiment of such a shaft 10, here a drive shaft having an upper portion 11 including an end portion 12 for engaging with a power delivery interface of a drive unit of the food processing apparatus. The end portion 12 may include radially extending ribs 13 or similar to improve the grip or friction of the engagement with the power delivery interface of the drive unit, which power delivery interface may for example comprise opposing or matching ribs to engage with the radially extending ribs 13.

The upper portion 11 is separated from a lower portion 16 of the drive shaft by a stop portion 15 such as a protrusion or edge 15, here shown as a collar around the drive shaft by way of non-limiting example. The stop portion 15 may alternatively only partially surround the drive shaft, e.g. may be composed of a plurality of spaced apart protrusions from the drive shaft. The stop portion 15 may have any suitable shape that will allow the stop portion 15 to perform its function of retaining the food processing member of the food processing assembly on the upper portion of the drive shaft as will be explained in more detail below. The upper portion 11 is shown to have a larger diameter than the lower portion 16 by way of non-limiting example only. It is equally feasible that the upper portion 11 and the lower portion 16 have the same diameter or that the upper portion 11 has a smaller diameter than the lower portion 16. The lower portion 16 comprises an engagement member 17, here a bearing hole although alternatively the engagement member 17 may be a protruding member, for engaging with an alignment member of the collection bowl of the food processing apparatus.

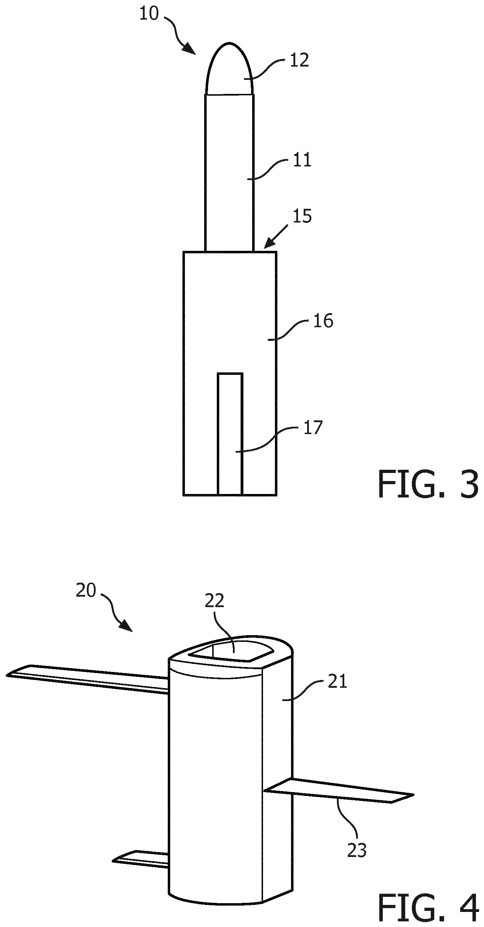

FIG. 3 schematically depicts an alternative embodiment of such a drive shaft, in which the stop portion 15 forms an upper edge surface of the lower portion 16 of the drive shaft. The shaft 10 may be made of any suitable material, e.g. a metal, metal alloy, composite or plastics material. The shaft 10 may be formed in any suitable manner, e.g. by moulding or die-casting.

FIG. 4 schematically depicts an embodiment of a food processing member 20 of the food processing assembly further including the shaft 10. The food processing member 20 comprises a main body 21 from which one or more cutting blades 23 extend for cutting a food product into pieces of a desired size as will be explained in more detail below. The body 21 may comprise any suitable number of cutting blades, which may have any suitable shape. For example, the cutting blades 23 may radially extend from the main body 21 and may have a length depending on a longitudinal position on the main body 21. In an embodiment, the cutting blades 23 extending from a bottom portion of the main body 21 are shorter than cutting blades 23 extending from an upper portion of the main body 21, such that the length distribution of the cutting blades 23 matches a bowl shape, e.g. the shape of the separation basket of the food processing apparatus. The cutting blades may have one or more sharpened cutting edges.

The body 21 envelopes an engagement portion 22 in the form of a channel through the body 21. The channel is typically dimensioned such that the upper portion 11 of the shaft 10, i.e. the drive shaft, can slide through the channel, such that the body 21 can be mounted on the edge 15 of the drive shaft. The grooves 14 of the drive shaft may engage with a form-fit interface (not shown) on the inner surface of the channel to increase the friction between the drive shaft and the food processing member 20. The drive shaft, when rotatably coupled to the drive unit of the food processing apparatus, thus can drive the rotation of the food processing member 20, i.e. by indirectly coupling the food processing member 20 to the drive unit.

As will be explained in more detail below, the shaft 10 can slide out of the engagement with the food processing member 20, i.e. the upper portion of the drive shaft drops out of the channel of the food processing member 20, when the collection bowl of a food processing apparatus is removed, as this disrupts the engagement of the engagement member 17 with the alignment member on the collection bowl floor.

In FIG. 4, the food processing member 20 is this embodiment is shown as a cutting tool although it should be understood that other types of tools, e.g. whisking tools, mixing blades and so on, are equally feasible, which different types of tools will have in common the body 21 and the engagement portion 22 to facilitate the sliding engagement between the shaft 10 and the food processing member 20 as explained above. The food processing member 20 may be made of any suitable material, e.g. e.g. a metal, metal alloy, composite or plastics material, or a combination thereof. For example, the main body 21 may be made of a plastics material and the cutting blades 23 may be made of a metal or metal alloy, e.g. stainless steel.

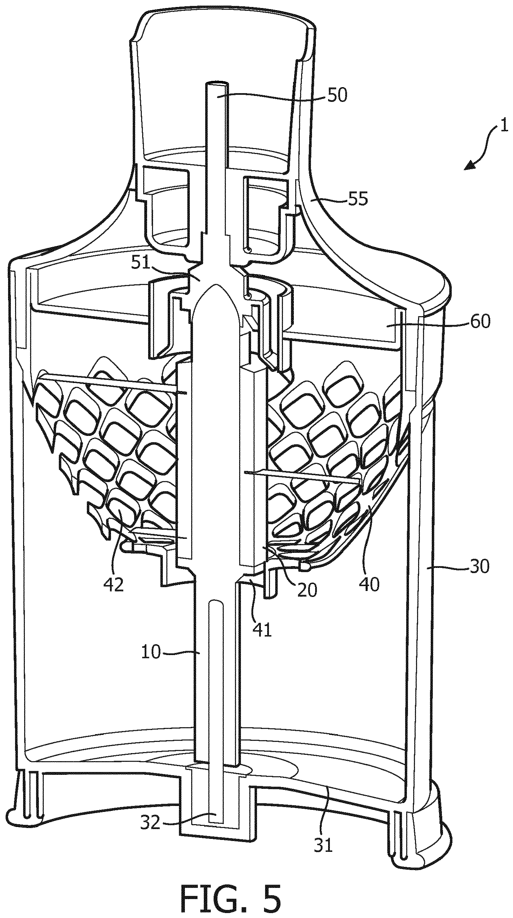

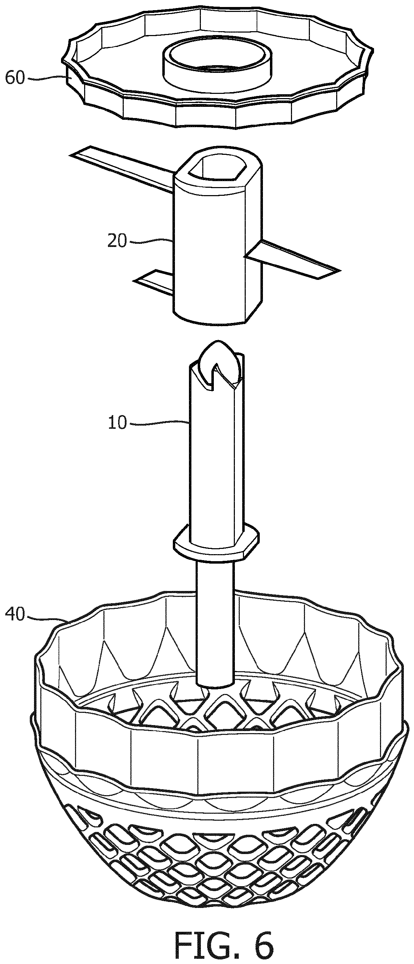

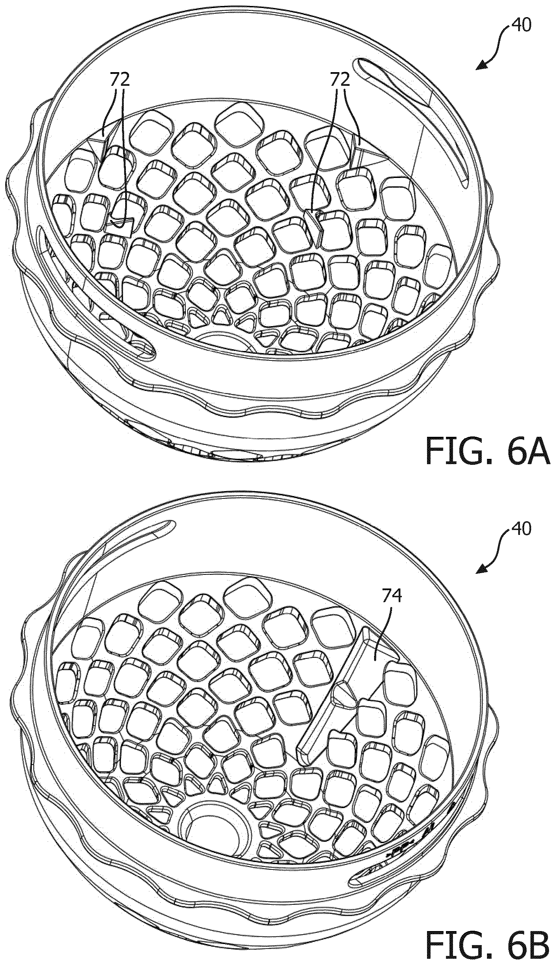

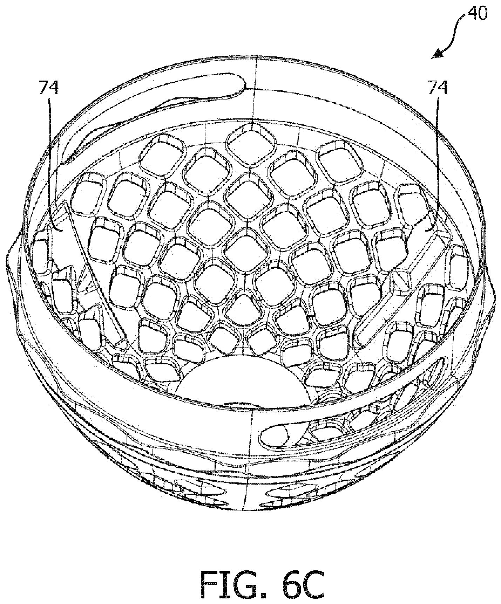

FIG. 5 schematically depicts a cross-section of food processing apparatus 1 including the above described food processing assembly according to an embodiment, with FIG. 6 schematically providing an exploded view of part of the food processing apparatus 1. The food processing apparatus 1 comprises a collection bowl 30, e.g. a transparent plastics collection bowl, having a floor 31 comprising an alignment portion 32 engaging with the engagement member 17 of the shaft 10. The engagement member 17 is rotatably mounted on the alignment portion 32. In this embodiment, the alignment portion 32 is a centring pin engaging with a bearing hole of the shaft 20 although in an alternative embodiment the alignment portion 32 may be a centring hole and the engagement member 17 may be a pin fitting into this centring hole.

The food processing apparatus 1 further comprises a separation basket 40, e.g. a filter basket or sieve basket, and made of any suitable material such as plastic. The separation basket 40 is suspended in the collection bowl 30 such that a clearance exists between the bottom of the separation basket 40 and the floor of the collection bowl 30 in order to provide a suitably large collection volume in the collection bowl 30 for collecting food forced through the separation basket 40, e.g. chopped food pieces of a desired size. To this end, the separation basket may comprise a mesh including holes 42 of a suitable dimension, for instance having a maximum diameter in the range of 5-12 mm. The holes 42 may have any suitable shape, e.g., a circular, elliptical, triangular, square, rectangular, or any other suitable polygonal shape. In an a particularly preferred embodiment, the holes 42 are rectangular holes having sides of approximate length 7 mm and 10 mm respectively. The separation basket 40 comprises a concentric central aperture 41 in the bottom of the basket, which aperture faces the alignment portion 32 of the collection bowl 30.

FIG. 6A schematically depicts a perspective view of a separation basket according to an embodiment; FIG. 6B schematically depicts a perspective view of a separation basket according to another embodiment; FIG. 6C schematically depicts a perspective view of a separation basket according to still another embodiment. The separation basket 40 may comprise at least one set of flow-breaker disposing on the inner wall of the separation basket 40. Each set of the flow-breaker may comprise at least two separate ribs 72 (FIG. 6A) or one united rib 74 (FIG. 6B, FIG. 6C). More particularly, the amount of the set of the flow-breaker disposing on the inner wall of the separation basket 40 can be 2 to 8. For the embodiment of adopting the flow-breaker of two separate ribs 72, 4, 6 or 8 sets of flow-breaker can be placed; for the embodiment of adopting the flow-breaker of one united rib 74, less (e.g. 2, 3, 4 or 6) sets of flow-breaker can be placed. Those skilled in the art can understand that the actual amount may be adjusted according to the actual application scenario. Moreover, these flow-breakers can be placed evenly concentrically or not evenly concentrically alongside the circumference.

This kind of unique feature can help to improve the cutting quality (e.g. regularity and dryness) and also to reduce the application time as well as to enlarge the variety of possible ingredients to be proceeded.

Before the emergence of this unique feature, the current solution has a smooth inner surface of the separation basket without any ribs/obstacles for the food ingredients to be processed. During application it can happen that specific size and hardness of the food ingredients could be accelerated by the cutting blades and rotate inside the separation basket and may not be cut so easily by the cutting blades which is not optimal for the cutting of the food ingredients, as it leads to a homogenous flow. One strong example for that are ice-cubes. Then the user has to stop the application and make some pulsing actions to get the food ingredients be cut, for ice-cubes not possible at all.

However, with this kind of flow-breakers it is possible to interrupt this homogenous flow and create some turbulences insde the separation basket 40 by some kind of ribs/obstacles 72, 74 added to the inner wall of the separation basket 40, so that the food ingredients can be cut easily, also possible for ice-cubes. So at least above mentioned two styles of flow-breakers are provided in the present invention.

Although the upper margins of the separation basket 40 shown in FIG. 6A-6C are rounded which are different from the one shown in FIG. 6 (polygonal), the shape of the upper margins of the separation baskets 40 acutally can be adjusted according to the shape of the corresponding cleaning lid 60 (it will be described in detail hereinafter) which may be mounted over the separation basket 40.

There also can be two long slots on the upper margins of the separation basket 40 to help the user's fingers to lift up the separation basket 40 from the collection bowl 30 therein more easily.

A drive unit 50 is mounted on the collection bowl 30 and the separation basket 40 suspended therein, which drive unit 50 typically comprises a motor and a power delivery interface 51, e.g. a rotation member comprising ribs or the like. The motor may be directly coupled to the power delivery interface 51 or may be coupled to the power delivery interface 51 through a gear box to adjust the torque delivered by the power delivery interface 51. The drive unit 50 may be integrated in a housing 55, which may act as a lid of the food processing apparatus 1 and may further comprise a user interface for controlling the drive unit 50 of the food processing apparatus 1.

The shaft 10, here a drive shaft, is wedged between the collection bowl 30 through the engagement its engagement member 17 and the alignment portion 32 on the bowl floor 31 and the rotatable coupling between its upper end portion 12 and the power delivery interface 51 of the drive unit 50. The upper portion 11 of the drive shaft extends through the central aperture 41 of the separation basket 40 towards the drive unit 50, with the upper portion 11 having a maximum cross-section or diameter that is smaller than the diameter of the concentric aperture 41.

The food processing member 20 is mounted on the upper portion 11 of the drive shaft such that the food processing member 20 is located within the separation basket 40. The food processing member 20 has a maximum cross-section or diameter that is larger than the diameter of the concentric aperture 41. The food processing member 20 may be retained in the separation basket 40 by the appropriate positioning of the stop portion 15 on the drive shaft, e.g. level with or above the concentric aperture 41 when the drive shaft is clamped in the food processing apparatus 1. Alternatively, the body 21 of the food processing member 20 may have a maximum cross-section or diameter that is larger than the diameter of the concentric aperture 41 such that the food processing member 20 can be supported on a rim (not shown) surrounding the concentric aperture 41. In this embodiment, the shaft 10 does not need to have a stop portion 15 and it only acts as a retention element in the sense that it retains the coupling between the food processing member and the drive unit 50 when the collection bowl 30 is in place.

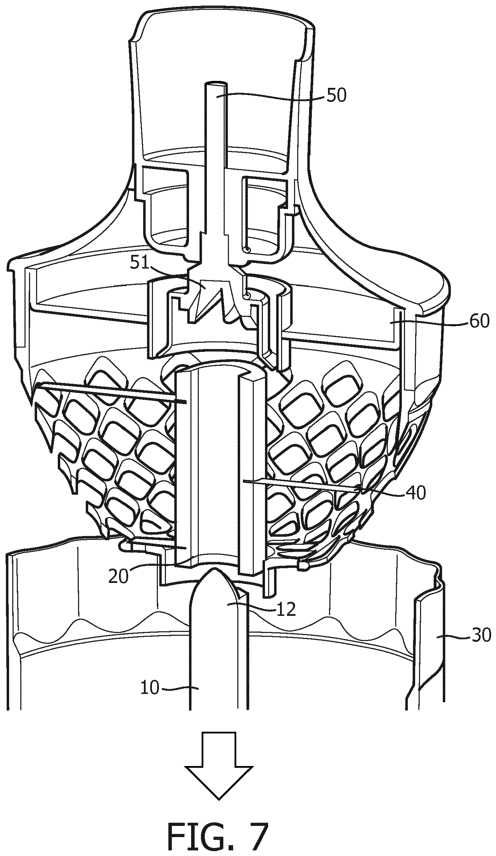

As previously explained, the food processing member 20 is slidably mounted on the upper portion 11 of the drive shaft such that when the food processing apparatus 1 is not fully assembled prior to use or disassembled during use by intentional or inadvertent removal of the collection bowl 30, the driving shaft slides downwardly through the channel of the food processing member 20 and through the concentric aperture 41 of the separation basket 40 as schematically depicted by the block arrow in FIG. 7. This disengages the food processing member 20 from the drive train, as the indirect coupling of the food processing member 20 to the drive train provided by the drive shaft is disrupted by virtue of the upper end portion 12 of the drive shaft disconnecting from the power delivery interface 51 of the drive unit 50. Hence, the retention member 10 falls out of the separation basket 40 through the concentric aperture 41 whilst the food processing member 20 is retained in the separation basket 40. This ensures that it is practically impossible to operate the food processing apparatus 1 in the absence of the collection bowl 30, as the coupling between the food processing member 20 and the drive unit 50 cannot be established or retained in this absence.

Where the body 21 of the food processing member 20 is supported on a rim around the concentric aperture 41 of the separation basket 40, the friction between the body 21 and this rim may force the food processing member 20 to come to a rapid stop upon the drive shaft sliding out of the food processing member 20, thus further increasing the safety of the food processing apparatus 1 due to the fact that its user is unlikely to be harmed by a spinning or tumbling food processing member 20 within the separation basket 40.

As a further safety measure, the basket 40 may be coupled to the drive unit 50 by a coupling mechanism when correctly fitted in the food processing apparatus 1, which coupling mechanism enables the operation of the drive unit 50. Hence, in the absence of the basket 40 or its correct fit in the food processing apparatus 1, the drive unit 50 cannot be engaged. Any suitable coupling mechanism may be used for this purpose. It is noted that such coupling mechanisms are well-known per se.

Optionally, a cleaning lid 60 (as shown in FIG. 5-6, 7) may be present in the food processing apparatus 1 to protect the bottom of the drive unit 50 from food pollution during operation of the food processing apparatus 1. The cleaning lid 60 for example may be removably mounted over the separation basket 40 for shielding the drive unit 50. The cleaning lid 60 comprises a central aperture 61 having a diameter larger than the maximum diameter of the upper portion 11 of the drive shaft. The upper portion 11 of the drive shaft extends through the central aperture 61, with the food processing member 20 being located in between the cleaning lid 60 and the separation basket 40.

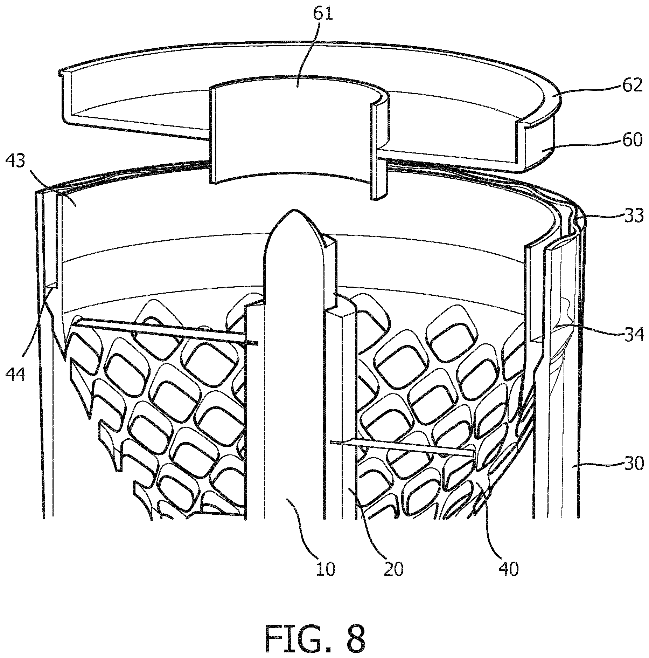

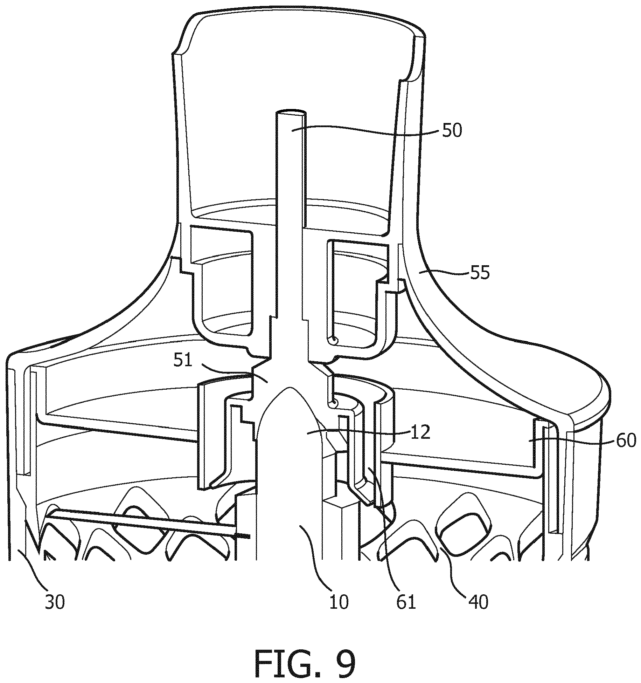

FIG. 8 schematically depicts an exploded view and FIG. 9 schematically depicts an assembled view of the upper part of the food processing apparatus 1 of an example embodiment of the mounting of the separation basket 40 in the collection bowl 30. The positioning of the shaft 10 and food processing member 20 is also shown within the separation basket 40. The collection bowl 30 may have an upright edge 34 from which optionally a pattern of protrusions 33 extend inwardly towards the separation basket 40 for engaging with an upright edge 43 of the separation basket 40. The upright edge 43 for instance may have a pattern of upright protrusions that are spaced apart, with these spaces dimensioned to receive the protrusions 33 such that the engagement of the protrusions 33 with the upright edge 43 of the separation basket 40 prevents the separation basket 40 from rotating during operation of the food processing apparatus 1. The separation basket 40 may further comprise an outwardly extending rim 44 that rests on an upright wall portion of the collection bowl 30.

The optional lid 60 may fit inside the upright edge 43 of the separation basket 40 and may have an outwardly extending rim 62 that covers the upper edge 43 of the separation basket 40 and the upright edge 34 of the collection bowl 30.

It should be understood that the embodiment in FIG. 8 and 9 is merely one of a number of straightforward alternatives to secure the separation basket 40 in the collection bowl 30 and to stop the separation basket 40 from rotating during operation of the food processing apparatus 1. For example, it is equally feasible that the separation basket 40 is immobilized on the drive unit 50 to prevent its rotation during operation of the food processing apparatus 1. Other suitable design choices will be immediately apparent to the skilled person.

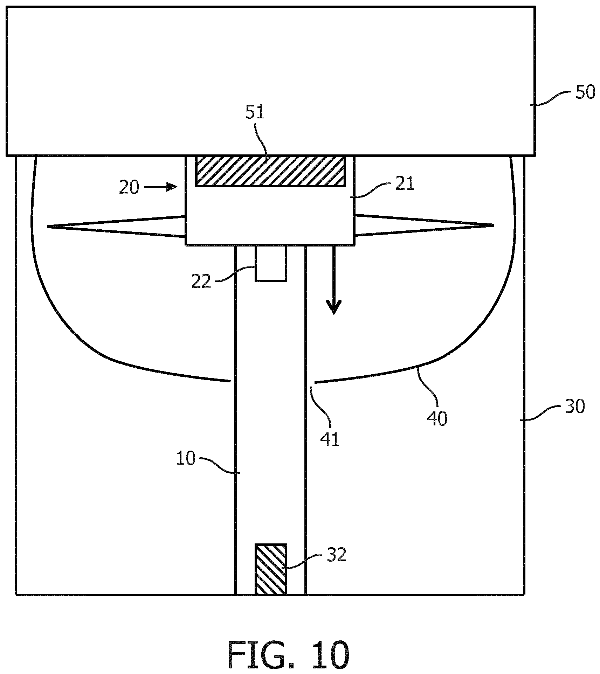

In the above embodiments of the food processing apparatus 1, food processing assembly comprises a retention member or shaft 10 acting as a drive shaft for the food processing member 20, with the coupling between the drive unit 50 and the food processing assembly provided (retained) by the drive shaft, such that the food processing member 20 is indirectly coupled to the drive unit 50, i.e. via the drive shaft. FIG. 10 schematically depicts an alternative embodiment of the food processing apparatus 1 in which the food processing member 20 is directly rotatably coupled to the power delivery interface 51 of the drive unit 50.

In this embodiment, the food processing member 20 has an upper portion, e.g. a suitable shaped aperture or the like, that physically contacts the power delivery interface 51 and a lower portion comprising the engagement portion 22 for engaging with the shaft 10. The shaft 10 is arranged to retain the food processing member 20 against the drive unit 50 and may extend from the collection bowl floor 31 towards the drive unit 50, with its upper portion 11 extending through the concentric aperture 41 of the separation basket 40 as previously explained. The shaft 10 may terminate at the lower end of the food processing member 20 as shown in FIG. 10 or may extend at least partially through the food processing member 20, e.g. may terminate on the drive unit 50 instead.

As before, the shaft 10 is engaged with the alignment portion 32 of the collection bowl floor 31 and the food processing member 20 is slidably mounted on the shaft 10. For example, the upper end of the shaft 10 may comprise an aperture for receiving a protruding engagement portion 22, e.g. a pin, axle or the like, of the food processing member 20 or the upper end of the shaft 10 may comprise a protrusion, e.g. a pin, axle or the like, for insertion into an engagement portion 22 in the form of an aperture or channel of the food processing member 20. In both embodiments, the shaft 10 does not transmit driving force to the food processing member 20 but simply retains the coupling between the food processing member 20 and the drive unit 50 when the food processing apparatus 1 is correctly assembled. In an alternative embodiment, the engagement portion 22 may be designed as a

coupling part for transmitting torque, so that the food processing member 20 drives the shaft 10 to rotate together with it. As before, in the absence of the collection bowl 30, the shaft 10 falls away through the concentric aperture 41 of the separation basket 40, such that the food processing member 20 is no longer retained against the power delivery interface 51 of the drive unit 50 and falls into the separation basket 40 as indicated by the vertical downward arrow.

The food processing apparatus 1 may be any suitable type of food processing apparatus, such as a hand-held or surface-mounted food processing apparatus. In an embodiment, the food processing apparatus 1 is a food cutting apparatus, such as a vegetable chopper. Other suitable embodiments of the food processing apparatus 1 include an ice cube crusher, a potato masher or any other type of food processing apparatus in which a food product is cut into smaller pieces of a desired size.

It should be noted that the above-mentioned embodiments illustrate rather than limit the invention, and that those skilled in the art will be able to design many alternative embodiments without departing from the scope of the appended claims.

## Claims

1. A food processing apparatus (1) comprising, when assembled:
a collection bowl (30) comprising an alignment portion (32) on a bowl floor (31);
a separation basket (40) mounted in the collection bowl (30) and comprising a lower central aperture (41) facing the alignment portion (32);
a drive unit (50) comprising a power delivery interface (51); and
a food processing assembly, comprising:
a food processing member (20) having a maximum diameter larger than the lower central aperture diameter within the separation basket (40) and having a body (21) comprising an engagement portion (22) facing the alignment portion (32); and
a shaft (10) for engaging the food processing member (20) with the power delivery interface (51), the shaft (10) comprising an engagement member (17) engaging with the alignment portion (32) and having an upper portion (11) extending through the lower central aperture (41) towards the drive unit (50), the upper portion (11) having a maximum diameter smaller than the lower central aperture diameter and being slidably engaged with the engagement portion (22).

2. The food processing apparatus (1) of claim 1, wherein:
the body (21) has an upper portion rotatably coupled to the power delivery interface (51) and a lower portion comprising the engagement portion (22); and
the shaft (10) is arranged to retain the food processing member (20) against the drive unit (50).

3. The food processing apparatus (1) of claim 1, wherein:
the shaft (10) is a drive shaft of the food processing member (20), said upper portion (11) being rotatably coupled to the power delivery interface (51); and
the engagement portion (22) of the food processing member is a channel through said body (21), the upper portion of the drive shaft extending through said channel.

4. The food processing apparatus (1) of claim 3, wherein the drive shaft comprises a stop portion (15) for retaining the body (21) of the food processing member (20) on the upper portion (11).

5. The food processing apparatus (1) of claim 4, wherein the stop portion (15) comprises an edge protruding from the drive shaft or a step from the upper portion (11) to a lower portion (16) of the drive shaft.

6. The food processing apparatus (1) of any of claim 3-5, wherein the separation basket (40) comprises a rim around the lower aperture, the food processing member (20) being retained in the separation basket by said rim.

7. The food processing apparatus (1) of any of claims 1-6, further comprising a cleaning lid (60) removably mounted over the separation basket (40) for shielding the drive unit (50), the cleaning lid comprising a further aperture (61), wherein the upper portion (11) of the drive shaft extends through the further aperture and the food processing member (20) is located between the cleaning lid and the separation basket (40).

8. The food processing apparatus (1) of any of claims 1-7, wherein the separation basket (40) comprises a mesh including holes (42) having a maximum diameter in the range of 5-12 mm.

9. The food processing apparatus (1) of claim 8, wherein the holes (42) have a rectangular shape having a first dimension from 6 to 8 mm and a second dimension from 9 to 11 mm.

10. The food processing apparatus (1) of claim 8, wherein the separation basket (40) comprises at least one set of flow-breaker disposing on the inner wall of the separation basket (40), each set of the flow-breaker comprises at least two separate ribs (72) or one united rib (74).

11. The food processing apparatus (1) of claim 10, wherein the amount of the set of the flow-breaker disposing on the inner wall of the separation basket (40) is 2 to 8.

12. The food processing apparatus (1) of any of claims 1-11, wherein the separation basket (40) is interfaced with one of the collection bowl (30) and drive unit (50) to prevent rotation of the separation basket during operation of the food processing apparatus.

13. The food processing apparatus (1) of any of claims 1-12, wherein the drive unit (50) is adapted to be disabled from functioning when separation basket (40) is not assembled.

14. The food processing apparatus (1) of any of claims 1-13, wherein the drive unit (50) is contained in a sealed unit (55) including a user interface, the sealed unit fitting onto the collection bowl (30).

15. The food processing apparatus (1) of any of claims 1-14, wherein the food processing apparatus is a hand-held food processing apparatus or a surface-mounted food processing apparatus.

## Patentansprüche

1. Nahrungsmittelverarbeitungsvorrichtung (1), im zusammengebauten Zustand umfassend:
einen Auffangbehälter (30), der einen Ausrichtabschnitt (32) auf einem Behälterboden (31) umfasst;
einen Trennkorb (40), der in dem Auffangbehälter (30) montiert ist und eine untere zentrale Öffnung (41) umfasst, die dem Ausrichtabschnitt (32) zugewandt ist;
eine Antriebseinheit (50), die eine Stromversorgungsschnittstelle (51) umfasst; und eine Nahrungsmittelverarbeitungsanordnung, umfassend:
ein Nahrungsmittelverarbeitungselement (20) mit einem maximalen Durchmesser, der größer als der untere zentrale Öffnungsdurchmesser innerhalb des Trennkorbs (40) ist, und einen Körper (21) aufweist, der einen Eingriffsabschnitt (22) umfasst, welcher dem Ausrichtabschnitt (32) zugewandt ist; und
eine Welle (10) zum Eingriff des Nahrungsmittelverarbeitungselements (20) mit der Stromversorgungsschnittstelle (51), wobei die Welle (10) ein Eingriffselement (17) umfasst, das mit dem Ausrichtabschnitt (32) in Eingriff steht und einen oberen Abschnitt (11) aufweist, der sich durch die untere zentrale Öffnung (41) in Richtung der Antriebseinheit (50) erstreckt, wobei der obere Abschnitt (11) einen maximalen Durchmesser aufweist, der kleiner als der untere zentrale Öffnungsdurchmesser ist und verschiebbar mit dem Eingriffsabschnitt (22) in Eingriff steht.

2. Nahrungsmittelverarbeitungsvorrichtung (1) nach Anspruch 1, wobei:
der Körper (21) einen oberen Abschnitt aufweist, der drehbar mit der Stromversorgungsschnittstelle (51) gekoppelt ist, und einen unteren Abschnitt, der den Eingriffsabschnitt (22) umfasst; und
die Welle (10) so angeordnet ist, dass sie das Nahrungsmittelverarbeitungselement (20) gegen die Antriebseinheit (50) hält.

3. Nahrungsmittelverarbeitungsvorrichtung (1) nach Anspruch 1, wobei:
die Welle (10) eine Antriebswelle des Nahrungsmittelverarbeitungselements (20) ist, wobei der obere Abschnitt (11) drehbar mit der Stromversorgungsschnittstelle (51) gekoppelt ist; und
der Eingriffsabschnitt (22) des Nahrungsmittelverarbeitungselements ein Kanal durch den Körper (21) ist, wobei sich der obere Abschnitt der Antriebswelle durch den Kanal erstreckt.

4. Nahrungsmittelverarbeitungsvorrichtung (1) nach Anspruch 3, wobei die Antriebswelle einen Anschlagabschnitt (15) zum Halten des Körpers (21) des Nahrungsmittelverarbeitungselements (20) auf dem oberen Abschnitt (11) umfasst.

5. Nahrungsmittelverarbeitungsvorrichtung (1) nach Anspruch 4, wobei der Anschlagabschnitt (15) eine Kante umfasst, die von der Antriebswelle vorsteht, oder eine Stufe von dem oberen Abschnitt (11) zu einem unteren Abschnitt (16) der Antriebswelle.

6. Nahrungsmittelverarbeitungsvorrichtung (1) nach einem der Ansprüche 3-5, wobei der Trennkorb (40) einen Rand um die untere Öffnung herum umfasst, wobei das Nahrungsmittelverarbeitungselement (20) durch den Rand im Trennkorb gehalten wird.

7. Nahrungsmittelverarbeitungsvorrichtung (1) nach einem der Ansprüche 1-6, weiter umfassend einen Reinigungsdeckel (60), der abnehmbar über dem Trennkorb (40) zum Abschirmen der Antriebseinheit (50) montiert ist, wobei der Reinigungsdeckel eine weitere Öffnung (61) umfasst, wobei sich der obere Abschnitt (11) der Antriebswelle durch die weitere Öffnung erstreckt und das Nahrungsmittelverarbeitungselement (20) zwischen dem Reinigungsdeckel und dem Trennkorb (40) angeordnet ist.

8. Nahrungsmittelverarbeitungsvorrichtung (1) nach einem der Ansprüche 1-7, wobei der Trennkorb (40) ein Netz mit Löchern (42) mit einem maximalen Durchmesser im Bereich von 5-12 mm umfasst.

9. Nahrungsmittelverarbeitungsvorrichtung (1) nach Anspruch 8, wobei die Löcher (42) eine rechteckige Form mit einer ersten Abmessung von 6 bis 8 mm und einer zweiten Abmessung von 9 bis 11 mm aufweisen.

10. Nahrungsmittelverarbeitungsvorrichtung (1) nach Anspruch 8, wobei der Trennkorb (40) mindestens einen Satz Strömungsbrecher umfasst, der an der Innenwand des Trennkorbs (40) angeordnet ist, wobei jeder Satz des Strömungsbrechers mindestens zwei separate Rippen (72) oder eine verbundene Rippe (74) umfasst.

11. Nahrungsmittelverarbeitungsvorrichtung (1) nach Anspruch 10, wobei die Menge des Satzes des Strömungsbrechers, der auf der Innenwand des Trennkorbes (40) angeordnet ist, 2 bis 8 beträgt.

12. Nahrungsmittelverarbeitungsvorrichtung (1) nach einem der Ansprüche 1-11, wobei der Trennkorb (40) mit einem der Auffangbehälter (30) und der Antriebseinheit (50) gekoppelt ist, um eine Drehung des Trennkorbes während des Betriebs der Nahrungsmittelverarbeitungsvorrichtung zu verhindern.

13. Nahrungsmittelverarbeitungsvorrichtung (1) nach einem der Ansprüche 1-12, wobei die Antriebseinheit (50) so angepasst ist, dass sie nicht mehr funktionsfähig ist, wenn der Trennkorb (40) nicht montiert ist.

14. Nahrungsmittelverarbeitungsvorrichtung (1) nach einem der Ansprüche 1-13, wobei die Antriebseinheit (50) in einer geschlossenen Einheit (55) einschließlich einer Benutzeroberfläche enthalten ist, wobei die geschlossene Einheit auf den Auffangbehälter (30) passt.

15. Nahrungsmittelverarbeitungsvorrichtung (1) nach einem der Ansprüche 1-14, wobei die Nahrungsmittelverarbeitungsvorrichtung eine tragbare Nahrungsmittelverarbeitungsvorrichtung oder eine oberflächenmontierte Nahrungsmittelverarbeitungsvorrichtung ist.

## Revendications

1. Appareil de traitement d'aliments (1) comprenant, une fois assemblé :
un bol de collecte (30) comprenant une partie d'alignement (32) sur un plancher de bol (31) ;
un panier de séparation (40) monté dans le bol de collecte (30) et comprenant une ouverture centrale inférieure (41) faisant face à la partie d'alignement (32) ;
une unité d'entraînement (50) comprenant une interface d'alimentation en énergie (51) ; et
un ensemble de traitement d'aliments, comprenant :
un élément de traitement d'aliments (20) ayant un diamètre maximum supérieur au diamètre d'ouverture centrale inférieure dans le panier de séparation (40) et ayant un corps (21) comprenant une partie de prise (22) faisant face à la partie d'alignement (32) ; et
un arbre (10) pour mettre en prise l'élément de traitement d'aliments (20) avec l'interface d'alimentation en énergie (51), l'arbre (10) comprenant un élément de prise (17) en prise avec la partie d'alignement (32) et ayant une partie supérieure (11) s'étendant à travers l'ouverture centrale inférieure (41) en direction de l'unité d'entraînement (50), la partie supérieure (11) ayant un diamètre maximum inférieur au diamètre d'ouverture centrale inférieure et étant mise en prise de manière coulissante dans la partie de prise (22).

2. Appareil de traitement d'aliments (1) selon la revendication 1, dans lequel :
le corps (21) a une partie supérieure couplée de manière rotative à l'interface d'alimentation en énergie (51) et une partie inférieure comprenant la partie de prise (22) ; et
l'arbre (10) est agencé pour retenir l'élément de traitement d'aliments (20) contre l'unité d'entraînement (50).

3. Appareil de traitement d'aliments (1) selon la revendication 1, dans lequel :
l'arbre (10) est un arbre d'entraînement de l'élément de traitement d'aliments (20), ladite partie supérieure (11) étant couplée de manière rotative à l'interface d'alimentation en énergie (51) ; et
la partie de prise (22) de l'élément de traitement d'aliments est un canal traversant ledit corps (21), la partie supérieure de l'arbre d'entraînement s'étendant à travers ledit canal.

4. Appareil de traitement d'aliments (1) selon la revendication 3, dans lequel l'arbre d'entraînement comprend une partie d'arrêt (15) destinée à retenir le corps (21) de l'élément de traitement d'aliments (20) sur la partie supérieure (11).

5. Appareil de traitement d'aliments (1) selon la revendication 4, dans lequel la partie d'arrêt (15) comprend un bord faisant saillie depuis l'arbre d'entraînement ou une marche allant de la partie supérieure (11) à une partie inférieure (16) de l'arbre d'entraînement.

6. Appareil de traitement d'aliments (1) selon l'une quelconque des revendications 3 à 5, dans lequel le panier de séparation (40) comprend un rebord autour de l'ouverture inférieure, l'élément de traitement d'aliments (20) étant retenu dans le panier de séparation par ledit rebord.

7. Appareil de traitement d'aliments (1) selon l'une quelconque des revendications 1 à 6, comprenant en outre un couvercle de nettoyage (60) monté de manière amovible sur le panier de séparation (40) pour protéger l'unité d'entraînement (50), le couvercle de nettoyage comprenant une ouverture supplémentaire (61), dans lequel la partie supérieure (11) de l'arbre d'entraînement s'étend à travers l'ouverture supplémentaire et l'élément de traitement d'aliments (20) est situé entre le couvercle de nettoyage et le panier de séparation (40).

8. Appareil de traitement d'aliments (1) selon l'une quelconque des revendications 1 à 7, dans lequel le panier de séparation (40) comprend une grille comprenant des trous (42) ayant un diamètre maximal compris dans la plage de 5 à 12 mm.

9. Appareil de traitement d'aliments (1) selon la revendication 8, dans lequel les trous (42) ont une forme rectangulaire ayant une première dimension de 6 à 8 mm et une seconde dimension de 9 à 11 mm.

10. Appareil de traitement d'aliments (1) selon la revendication 8, dans lequel le panier de séparation (40) comprend au moins un ensemble de briseur d'écoulement disposé sur la paroi intérieure du panier de séparation (40), chaque ensemble du briseur d'écoulement comprenant au moins deux nervures séparées (72) ou une nervure unifiée (74).

11. Appareil de traitement d'aliments (1) selon la revendication 10, dans lequel la quantité de l'ensemble du briseur d'écoulement disposé sur la paroi intérieure du panier de séparation (40) est comprise entre 2 et 8.

12. Appareil de traitement d'aliments (1) selon l'une quelconque des revendications 1 à 11, dans lequel le panier de séparation (40) est interfacé avec l'un parmi le bol de collecte (30) et l'unité d'entraînement (50) pour empêcher une rotation du panier de séparation pendant le fonctionnement de l'appareil de traitement d'aliments.

13. Appareil de traitement d'aliments (1) selon l'une quelconque des revendications 1 à 12, dans lequel l'unité d'entraînement (50) est adaptée pour être interdite de fonctionnement lorsque le panier de séparation (40) n'est pas assemblé.

14. Appareil de traitement d'aliments (1) selon l'une quelconque des revendications 1 à 13, dans lequel l'unité d'entraînement (50) est contenue dans une unité scellée (55) comprenant une interface utilisateur, l'unité scellée s'ajustant sur le bol de collecte (30).

15. Appareil de traitement d'aliments (1) selon l'une quelconque des revendications 1 à 14, dans lequel l'appareil de traitement d'aliments est un appareil de traitement d'aliments portable ou un appareil de traitement d'aliments monté sur surface.
